# EUROPÄISCHE PATENTSCHRIFT

(11) **EP 3 083 401 B1**
(45) Veröffentlichungstag und Bekanntmachung des Hinweises auf die Patenterteilung: **24.06.2020**
(21) Anmeldenummer: 14814838.0
(22) Anmeldetag: 16.12.2014
(51) Int. Cl.: B64D 11/06

(54) **FLUGZEUGSITZAUFSTÄNDERVORRICHTUNG**
AIRCRAFT SEAT MOUNTING DEVICE
DISPOSITIF DE SUPPORT DE SIÈGE D'AVION

(30) Priorität: 16.12.2013 DE 102013114130
(43) Veröffentlichungstag der Anmeldung: 26.10.2016
(73) Patentinhaber: Recaro Aircraft Seating GmbH & Co. KG, 74523 Schwäbisch Hall (DE)
(72) Erfinder: RODERWALD, Martin, Fort Worth, TX 76244 (US); DRENZECK, Thomas, 74545 Michelfeld (DE)
(74) Vertreter: Daub, Thomas
(86) Internationale Anmeldenummer: PCT/EP2014/077995
(87) Internationale Veröffentlichungsnummer: WO 2015/091507

(56) Entgegenhaltungen:
- EP-A1- 0 423 348
- DE-A1-102009 014 720
- DE-A1-102012 020 032
- FR-A5- 2 148 929
- US-A- 5 553 923

## Beschreibung

### Stand der Technik

Die Erfindung betrifft eine Flugzeugsitzaufständervorrichtung nach dem Oberbegriff des Patentanspruchs 1.

Es ist bereits eine Flugzeugsitzaufständervorrichtung mit zumindest einem Trägerprofil, mit zumindest einem Flugzeugsitzelement und mit zumindest einem Zwischenelement, das das zumindest eine Trägerprofil zumindest im Wesentlichen umschließt und mit dem zumindest einen Flugzeugsitzelement gekoppelt ist, vorgeschlagen worden. Dokument EP0423348 offenbart eine Flugzeugsitzaufständervorrichtung mit zumindest einem Trägerprofil, mit zumindest einem als Sitzteiler oder als Sitzfuß ausgebildeten Flugzeugsitzelement und mit zumindest einem Zwischenelement das das zumindest eine Trägerprofil zumindest im Wesentlichen umschließt und mit dem zumindest einen Flugzeugsitzelement gekoppelt ist, das Zwischenelement ist in einer Axialrichtung zu dem Trägerprofil, auf dem es angeordnet ist, fixiert, wobei das Zwischenelement zumindest in einem Crashfall/ Verformungsfall drehbar zu dem Trägerprofil angeordnet ist, wodurch Torsionsbelastungen auf das Trägerprofil verhindert bzw. minimiert werden.

Die Aufgabe der Erfindung besteht insbesondere darin, eine gattungsgemäße Vorrichtung mit verbesserten Eigenschaften hinsichtlich eines Gewichts und einer Belastbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzaufständervorrichtung mit zumindest einem Trägerprofil, mit zumindest einem Flugzeugsitzelement und mit zumindest einem Zwischenelement, das das zumindest eine Trägerprofil zumindest im Wesentlichen umschließt und mit dem zumindest einen Flugzeugsitzelement gekoppelt ist.

Es wird vorgeschlagen, dass das Zwischenelement zumindest in einem Crashfall/Verformungsfall drehbar zu dem Trägerprofil angeordnet ist. Unter einer "Flugzeugsitzaufständervorrichtung" soll dabei insbesondere eine Vorrichtung verstanden werden, die einen Teil eines Flugzeugsitzes ausbildet, insbesondere einen Teil, mittels dessen der Flugzeugsitz auf einem Kabinenboden aufgeständert ist. Dabei ist die Flugzeugsitzaufständervorrichtung dazu vorgesehen, während eines Betriebs in den Flugzeugsitz eingeleitete Kräfte, wie beispielsweise eine Gewichtskraft einer auf dem Flugzeugsitz sitzenden Person, in den Kabinenboden abzuleiten. Unter einem "Trägerprofil" soll dabei insbesondere ein Element eines Flugzeugsitzes, insbesondere ein Teil eines Rahmens des Flugzeugsitzes, verstanden werden, wobei das Trägerprofil vorzugsweise als ein Querrohr ausgebildet ist, das parallel zu einer Querrichtung des Sitzes verläuft. Das Trägerprofil ist dabei vorzugsweise ein Teil von mehreren, nebeneinander in einer Flugzeugsitzreihe angeordneten Flugzeugsitzen. Unter einem "Flugzeugsitzelement" soll dabei insbesondere ein Teil des Flugzeugsitzes verstanden werden, das einen tragenden Teil des Flugzeugsitzes ausbildet. Dabei überträgt ein Sitzelement während eines Betriebs auftretende Kräfte und leitet diese weiter. Dabei ist das Flugzeugsitzelement vorzugsweise als ein Sitzteiler oder ein Sitzfuß ausgebildet. Unter einem "Zwischenelement" soll dabei insbesondere ein Element verstanden werden, das zwischen zwei Elementen, insbesondere zwischen zumindest einem Flugzeugsitzelement und dem Trägerprofil, angeordnet ist, wobei diese beiden Elemente über das Zwischenelement miteinander gekoppelt sind. Unter "zumindest im Wesentlichen umschließen" soll dabei insbesondere verstanden werden, dass das Zwischenelement das Trägerprofil zumindest zu mehr als 180 Grad, vorzugsweise zu mehr als 270 Grad und in einer besonders vorteilhaften Ausgestaltung vollständig umschließt. Unter der Wendung, dass zwei Elemente miteinander "gekoppelt" sind, soll dabei insbesondere verstanden werden, dass die beiden Elemente, wie insbesondere das Zwischenelement und das Flugzeugsitzelement, fest miteinander verbunden sind, also fest zueinander positioniert sind, wobei die beiden Elemente dabei starr oder aber auch gelenkig miteinander verbunden sein können. Dabei weist eines der Elemente vorzugsweise einen Anbindungsbock auf, über den das andere Element an das eine Element angebunden ist. Grundsätzlich ist es aber auch denkbar, dass die beiden Elemente direkt miteinander gekoppelt sind, beispielsweise durch eine Klebeverbindung oder eine Schweißverbindung oder eine andere, dem Fachmann als sinnvoll erscheinende stoffschlüssige Verbindung. Unter einem "Crashfall" soll dabei insbesondere ein Überlastfall verstanden werden, also ein Betriebszustand, in dem Kräfte auf die Flugzeugsitzaufständervorrichtung und/oder den Flugzeugsitz, dessen Teil die Flugzeugsitzaufständervorrichtung ist, wirken, die größer sind als Kräfte, die durch eine normale Belastung bei einem normalen Flugbetrieb entstehen. Dadurch kann das Flugzeugsitzelement über das Zwischenelement besonders vorteilhaft und einfach angebunden werden und Kräfte können in einem Crashfall besonders einfach über das Zwischenelement abgeleitet werden, ohne das Trägerprofil zusätzlich auf Torsion zu belasten, wodurch insbesondere das Trägerprofil mit einem besonders vorteilhaften geringen Gewicht ausgebildet werden kann.

Weiter wird vorgeschlagen, dass die Flugzeugsitzaufständervorrichtung zumindest ein weiteres Flugzeugsitzelement aufweist, das mit dem Zwischenelement gekoppelt ist. Dadurch können die zwei Flugzeugsitzelemente besonders vorteilhaft miteinander gekoppelt werden und Kräfte zwischen den beiden Flugzeugsitzelementen übertragen werden.

Ferner wird vorgeschlagen, dass das Flugzeugsitzelement als ein Sitzteiler ausgebildet ist. Unter einem "Sitzteiler" soll insbesondere ein Bauteil einer Flugzeugsitzreihe mit zumindest zwei seitlich nebeneinander angeordneten Flugzeugsitzen verstanden werden, das bezüglich einer vertikal zu einer Aufständerebene der Flugzeugsitzreihe ausgerichteten Vertikalrichtung zumindest im Wesentlichen oberhalb zumindest eines Trägerprofils, insbesondere eines Single Beams und/oder eines Querrohrs, angeordnet ist. Insbesondere ist der Sitzteiler ein starr ausgebildetes Bauteil der Flugzeugsitzreihe. Vorzugsweise ist der Sitzteiler zumindest im Wesentlichen bezüglich der Vertikalrichtung oberhalb eines Sitzbodens eines jeweiligen Flugzeugsitzes der zumindest zwei seitlich nebeneinander angeordneten Flugzeugsitze der Flugzeugsitzreihe angeordnet. Der Sitzteiler ist insbesondere dazu vorgesehen, eine Armauflageeinheit zu lagern. Vorzugsweise ist der Sitzteiler dazu vorgesehen, eine Gurtanbindung zu ermöglichen. Vorzugsweise bildet der Sitzteiler eine seitliche Begrenzung zumindest eines der zumindest zwei seitlich nebeneinander angeordneten Flugzeugsitze, wobei der Sitzteiler gangseitig und/oder bordseitig angeordnet sein kann und/oder eine Abgrenzung zwischen zwei seitlich nebeneinander angeordneten Flugzeugsitzen der zumindest zwei Flugzeugsitze ausbildet. Dadurch kann das Flugzeugsitzelement besonders vorteilhaft ausgebildet werden.

Es wird weiterhin vorgeschlagen, dass das Flugzeugsitzelement als ein Sitzfuß ausgebildet ist. Unter einem "Sitzfuß" soll dabei insbesondere ein Element verstanden werden, das den Flugzeugsitz mit einem Kabinenboden verbindet, auf dem der Flugzeugsitz, dessen Teil die Flugzeugsitzaufständervorrichtung ist, aufgeständert ist, wobei der Sitzfuß an einem unteren Ende dabei vorzugsweise mittels eines Anbindungselements mit dem Kabinenboden verbunden und an einem oberen Ende mit dem Trägerprofil gekoppelt ist. Dadurch kann der Sitzfuß des Flugzeugsitzes besonders vorteilhaft an das Trägerprofil angebunden werden.

Zudem wird vorgeschlagen, dass das Zwischenelement zumindest einen Anbindungsbock aufweist, über den das Flugzeugsitzelement mit dem Zwischenelement gekoppelt ist. Unter einem "Anbindungsbock" soll dabei insbesondere ein Element verstanden werden, das zumindest eine Aufnahme zur Befestigung eines weiteren Elements, wie insbesondere des Flugzeugsitzelements, aufweist. Dadurch kann das Flugzeugsitzelement besonders einfach und vorteilhaft mit dem Zwischenelement verbunden werden.

Weiterhin wird vorgeschlagen, dass der Anbindungsbock stoffschlüssig mit dem Zwischenelement gekoppelt ist. Unter "stoffschlüssig gekoppelt" soll insbesondere verstanden werden, dass Masseteile der zu koppelnden Elemente durch atomare oder molekulare Kräfte zusammengehalten werden, wie beispielsweise durch Löten, Schweißen, Kleben und/oder Vulkanisieren. Dadurch kann der Anbindungsbock besonders einfach kostengünstig und sicher mit dem Zwischenelement gekoppelt werden.

Ferner wird vorgeschlagen, dass der Anbindungsbock in einem Anbindungsbereich mit dem Zwischenelement eine Erstreckung in Umfangsrichtung aufweist, die kleiner ist als 180 Grad. Unter einem "Anbindungsbereich" soll dabei insbesondere ein Bereich verstanden werden, in dem der Anbindungsbock mit dem Zwischenelement verbunden ist. Dadurch kann der Anbindungsbock besonders vorteilhaft und platzsparend ausgebildet werden, wobei insbesondere vorteilhaft zumindest zwei Anbindungsböcke in einem gleichen Umfangsbereich angeordnet werden können. Dadurch können an den Anbindungsböcken angebundene Elemente, wie insbesondere Flugzeugsitzelemente, besonders vorteilhaft in einer Ebene an das Zwischenelement angebunden werden.

Es wird zudem vorgeschlagen, dass das zumindest eine Zwischenelement zumindest in einer Axialrichtung zu dem Trägerprofil fixiert ist. Unter einer "Axialrichtung" soll dabei insbesondere eine Richtung verstanden werden, die der Haupterstreckungsrichtung des Trägerprofils entspricht. Die Axialrichtung ist dabei vorzugsweise quer zu einer Sitzrichtung ausgerichtet. So können das Zwischenelement und dadurch die an dem Zwischenelement angebundenen Flugzeugsitzelemente für einen Betrieb vorteilhaft positioniert werden.

Weiter wird vorgeschlagen, dass das Zwischenelement zumindest in einem Betriebszustand drehfest zu dem Trägerprofil angeordnet ist. Unter "drehfest" soll dabei insbesondere verstanden werden, dass das Zwischenelement nicht zu dem Trägerprofil drehbar ist.

Dadurch kann das Zwischenelement für einen Normalbetriebszustand besonders vorteilhaft mit dem Trägerprofil gekoppelt werden.

Weiterhin wird vorgeschlagen, dass das Zwischenelement zumindest in einem Betriebszustand mittels einer Klebeverbindung fest mit dem Trägerprofil verbunden ist. Dadurch kann vorteilhaft das Zwischenelement besonders einfach und kostengünstig mit dem Trägerprofil verbunden werden.

Ferner wird vorgeschlagen, dass das Trägerprofil zumindest im Wesentlichen aus einem Leichtmetall und/oder einem Faserverbundwerkstoff gebildet ist. Unter "zumindest im Wesentlichen aus einem Leichtmetall gebildet", soll dabei insbesondere verstanden werden, dass das Trägerprofil zumindest zu 60 %, vorzugsweise zu mehr als 80 % und in einer besonders vorteilhaften Ausgestaltung komplett aus einem Leichtmetall gebildet ist. Unter einem Leichtmetall soll dabei insbesondere ein Metall mit einer Dichte kleiner als 5 g/cm³ verstanden werden, wie insbesondere ein Aluminium, Titan oder Magnesium. Dabei können andere Flugzeugsitzelemente, wie beispielsweise ein Sitzteiler oder ein Sitzfuß, ebenfalls aus diesen Materialien bestehen. Dadurch kann das Trägerprofil besonders leicht ausgebildet werden.

Es wird weiter vorgeschlagen, dass die Flugzeugsitzaufständervorrichtung zumindest ein zweites Zwischenelement aufweist, wobei jeweils ein Flugzeugsitzelement mit einem der beiden Zwischenelemente gekoppelt ist. Unter einem weiteren "Zwischenelement" soll dabei insbesondere ein zusätzliches, von dem einen Zwischenelement unterschiedliches und getrennt ausgebildetes Zwischenelement verstanden werden. Dadurch können die beiden Flugzeugsitzelemente besonders vorteilhaft über jeweils ein separates Zwischenelement mit dem Trägerprofil gekoppelt werden.

Außerdem wird vorgeschlagen, dass die Flugzeugsitzaufständervorrichtung zumindest ein weiteres Flugzeugsitzelement aufweist, das direkt mit dem Trägerprofil gekoppelt ist.

Unter "gekoppelt" soll dabei insbesondere fest miteinander verbunden verstanden werden, wobei das Flugzeugsitzelement dabei vorzugsweise starr mit dem Trägerprofil verbunden ist. Dadurch kann das eine Flugzeugsitzelement besonders vorteilhaft mit dem Trägerprofil gekoppelt werden.

Die erfindungsgemäße Flugzeugsitzaufständervorrichtung soll hierbei nicht auf die oben beschriebene Anwendung und Ausführungsform beschränkt sein. Insbesondere kann die erfindungsgemäße Flugzeugsitzaufständervorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Flugzeugsitzaufständervorrichtung in einem ersten Ausführungsbeispiel,
- Fig. 2: eine Detailansicht eines Trägerprofils, eines Zwischenelements und von an das Zwischenelement angebundenen Flugzeugsitzelementen der erfindungsgemäßen Flugzeugsitzaufständervorrichtung,
- Fig. 3: eine Schnittansicht durch das Trägerprofil und das Zwischenelement,
- Fig. 4: eine schematische Darstellung einer erfindungsgemäßen Flugzeugsitzaufständervorrichtung in einem zweiten Ausführungsbeispiel,
- Fig. 5: eine schematische Darstellung einer erfindungsgemäßen Flugzeugsitzaufständervorrichtung in einem dritten Ausführungsbeispiel und
- Fig. 6: eine schematische Detailansicht eines Trägerprofils, eines Zwischenelements und dessen Anbindungsböcke einer erfindungsgemäßen Flugzeugsitzaufständervorrichtung in einem vierten Ausführungsbeispiel.

### Beschreibung der Ausführungsbeispiele

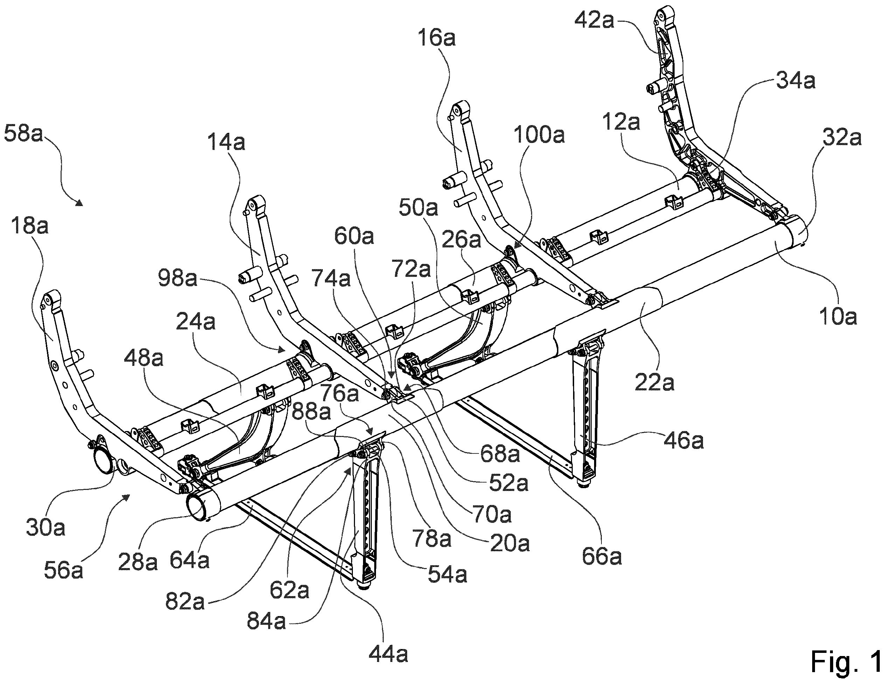

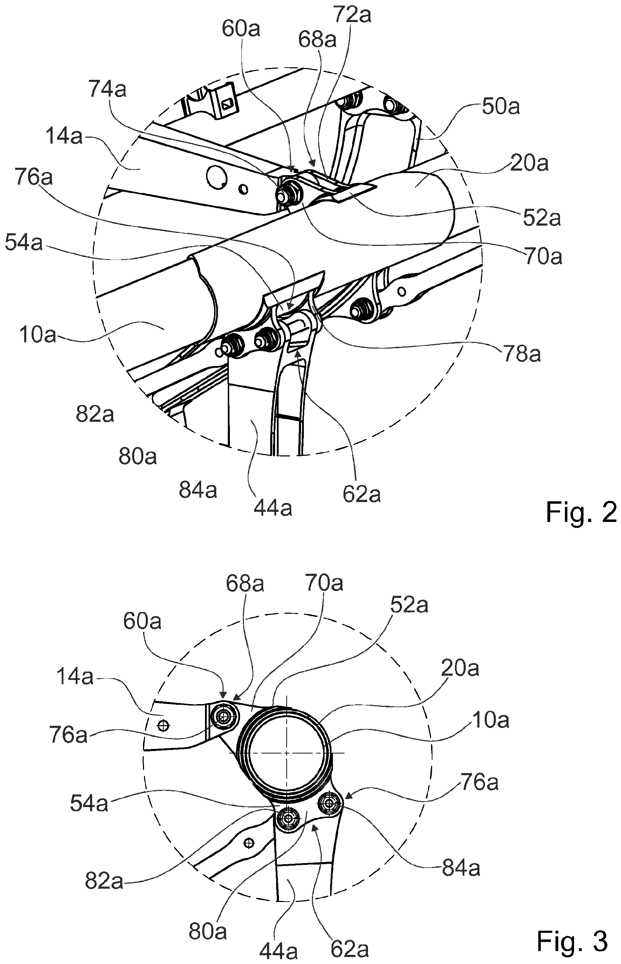

Die Figuren 1 bis 3 zeigen ein erstes Ausführungsbeispiel einer erfindungsgemäßen Flugzeugsitzaufständervorrichtung. Die Flugzeugsitzaufständervorrichtung ist Teil einer lediglich teilweise dargestellten Flugzeugsitzreihe 56a. Die Flugzeugsitzreihe 56a umfasst dabei drei Flugzeugsitze 58a. Grundsätzlich ist es auch denkbar, dass die Flugzeugsitzreihe 56a eine andere Anzahl, beispielsweise lediglich einen, zwei oder vier Flugzeugsitze 58a umfasst. Die Flugzeugsitze 58a sind dazu vorgesehen, dass Fluggäste während eines Flugs auf ihnen Platz nehmen können. Dabei weisen die Flugzeugsitze 58a jeweils einen nicht näher dargestellten Sitzboden und eine nicht näher dargestellte Rückenlehne auf. Des Weiteren ist jeder Flugzeugsitz 58a seitlich von jeweils einer nicht näher dargestellten Armlehne begrenzt. Dabei weisen zwei direkt benachbarte Flugzeugsitze 58a jeweils eine gemeinsame Armlehne auf. Die Flugzeugsitze 58a sind dazu vorgesehen, auf einer Aufständerebene aufgeständert zu werden. Die Aufständerebene wird dabei von einem Kabinenboden eines Flugzeugs ausgebildet. Mittels der Flugzeugsitzaufständervorrichtung sind die Flugzeugsitze 58a in einem montierten Zustand auf dem Kabinenboden aufgeständert.

Die Flugzeugsitzaufständervorrichtung umfasst ein erstes Trägerprofil 10a. Das erste Trägerprofil 10a ist als ein vorderes Querrohr ausgebildet. Die Flugzeugsitzaufständervorrichtung umfasst weiter ein zweites Trägerprofil 12a. Das zweite Trägerprofil 12a ist als ein hinteres Querrohr ausgebildet. Die beiden Trägerprofile 10a, 12a sind beabstandet zueinander angeordnet und verlaufen parallel zueinander. Das als vorderes Querrohr ausgebildete Trägerprofil 10a ist dabei in einem vorderen Bereich der Flugzeugsitze 58a angeordnet. Das als hinteres Querrohr ausgebildete zweite Trägerprofil 12a ist in einem hinteren Bereich der Flugzeugsitze 58a angeordnet. Die Trägerprofile 10a, 12a erstrecken sich dabei in einer Querrichtung zu den Flugzeugsitzen 58a. Die Querrichtung der Flugzeugsitze 58a ist dabei in einem rechten Winkel zu einer Sitzrichtung ausgerichtet.

Die beiden als Querrohre ausgebildeten Trägerprofile 10a, 12a sind im Wesentlichen gleich ausgebildet, weswegen im Folgenden lediglich das erste Trägerprofil 10a, das als vorderes Querrohr ausgebildet ist, näher beschrieben wird. Eine Beschreibung des ersten Trägerprofils 10a kann dabei zur Erläuterung des zweiten Trägerprofils 12a, das als hinteres Querrohr ausgebildet ist, herangezogen werden. Das als Querrohr ausgebildete Trägerprofil 10a ist rohrförmig ausgebildet. Das Trägerprofil 10a weist einen Querschnitt auf, der einen Ring ausbildet. Dabei ist das Trägerprofil 10a dünnwandig ausgebildet. Das Trägerprofil 10a ist aus einem Faserverbundwerkstoff gebildet. Grundsätzlich ist es auch denkbar, dass das Trägerprofil 10a aus einem Leichtmetall, wie beispielsweise einem Aluminium oder Magnesium, gebildet ist.

Die Flugzeugsitzaufständervorrichtung umfasst vier erste Flugzeugsitzelemente 14a, 16a, 18a, 42a. Die ersten Flugzeugsitzelemente 14a, 16a, 18a, 42a sind jeweils als ein Sitzteiler ausgebildet. Die als Sitzteiler ausgebildeten ersten Flugzeugsitzelemente 14a, 16a, 18a, 42a begrenzen jeweils einen Sitzbereich eines Flugzeugsitzes 58a. Dabei begrenzen jeweils zwei benachbarte, als Sitzteiler ausgebildete Flugzeugsitzelemente 14a, 16a, 18a, 42a einen Flugzeugsitz 58a der Flugzeugsitzreihe 56a. Die zwei außen liegenden, als Sitzteiler ausgebildeten Flugzeugsitzelemente 18a, 42a begrenzen die Flugzeugsitzreihe 56a nach außen. Die Flugzeugsitzelemente 14a, 16a, 18a, 42a sind L-förmig ausgebildet und erstrecken sich in einem montierten Zustand von dem als vorderes Querrohr ausgebildeten ersten Trägerprofil 10a zu dem als hinteres Querrohr ausgebildeten zweiten Trägerprofil 12a. In montiertem Zustand erstrecken sich die als Sitzteiler ausgebildeten Flugzeugsitzelemente 14a, 16a, 18a, 42a von dem als vorderes Querrohr ausgebildeten ersten Trägerprofil 10a bis hinter das als hinteres Querrohr ausgebildete zweite Trägerprofil 12a. In einem Bereich hinter dem als hinteres Querrohr ausgebildeten zweiten Trägerprofil 12a weisen die als Sitzteiler ausgebildeten ersten Flugzeugsitzelemente 14a, 16a, 18a, 42a einen Knick auf, ab dem sich die Flugzeugsitzelemente 14a, 16a, 18a, 42a von den Trägerprofilen 10a, 12a nach oben, von der Aufständerebene weg erstrecken. Dabei sind die als Sitzteiler ausgebildeten ersten Flugzeugsitzelemente 14a, 16a, 18a, 42a jeweils mit dem als hinteres Querrohr ausgebildeten Trägerprofil 12a gekoppelt. An einem vorderen Ende der als Sitzteiler ausgebildeten ersten Flugzeugsitzelemente 14a, 16a, 18a, 42a sind diese jeweils mit dem als vorderes Querrohr ausgebildeten Trägerprofil 10a gekoppelt. Dazu weisen die als Sitzteiler ausgebildeten ersten Flugzeugsitzelemente 14a, 16a, 18a, 42a an dem vorderen Ende jeweils eine Aufnahme 60a auf. Die Aufnahme 60a ist dabei von einem Durchgangsloch gebildet. Die als Sitzteiler ausgebildeten Flugzeugsitzelemente 14a, 16a, 18a, 42a sind dazu vorgesehen, dass weitere Bauteile der Flugzeugsitze 58a bzw. der Flugzeugsitzreihe 56a, wie insbesondere Armlehnen und/oder Rückenlehnen, angebracht werden. Die als Sitzteiler ausgebildeten ersten Flugzeugsitzelemente 14a, 16a, 18a, 42a sind aus einem Leichtmetall, wie insbesondere einem Aluminium, gebildet. Dabei sind die äußeren zwei, als Sitzteiler ausgebildeten ersten Flugzeugsitzelemente 18a, 42a anders ausgebildet als die inneren beiden, als Sitzteiler ausgebildeten ersten Flugzeugsitzelemente 14a, 16a. Grundsätzlich ist es auch denkbar, dass die Flugzeugsitzelemente 14a, 16a, 18a, 42a alle gleich und/oder aus einem anderen Material, wie beispielsweise einem Faserverbundwerkstoff, ausgebildet sind. Je nachdem, wie viele Flugzeugsitze 58a in der Flugzeugsitzreihe 56a vorhanden sind, kann es grundsätzlich auch sein, dass die Flugzeugsitzaufständervorrichtung eine andere Anzahl von als Sitzteiler ausgebildeten Flugzeugsitzelementen 14a, 16a, 18a, 42a aufweist.

Die Flugzeugsitzaufständervorrichtung umfasst vier zweite Flugzeugsitzelemente 44a, 46a, 48a, 50a. Die zweiten Flugzeugsitzelemente 44a, 46a, 48a, 50a sind dabei jeweils als ein Sitzfuß ausgebildet. Die als Sitzfüße ausgebildeten zweiten Flugzeugsitzelemente 44a, 46a, 48a, 50a sind dazu vorgesehen, die Flugzeugsitzaufständervorrichtung und damit die Flugzeugsitzreihe 56a auf die Aufständerebene aufzuständern. Dabei sind die zwei zweiten Flugzeugsitzelemente 44a, 46a als vordere Sitzfüße und die anderen zwei zweiten Flugzeugsitzelemente 48a, 50a als hintere Sitzfüße ausgebildet. Die als vordere Sitzfüße ausgebildeten zweiten Flugzeugsitzelemente 44a, 46a sind in einem montierten Zustand mit dem als vorderes Querrohr ausgebildeten ersten Trägerprofil 10a gekoppelt. Die als hintere Sitzfüße ausgebildeten zweiten Flugzeugsitzelemente 48a, 50a sind in einem montierten Zustand mit dem als hinteres Querrohr ausgebildeten zweiten Trägerprofil 12a gekoppelt. Dabei sind die zweiten Flugzeugsitzelemente 44a, 46a, 48a, 50a jeweils mit einem oberen Ende mit dem jeweiligen Trägerprofil 10a, 12a gekoppelt. Zur Anbindung an das jeweilige Trägerprofil 10a, 12a weisen die zweiten Flugzeugsitzelemente 44a, 46a, 48a, 50a an einem oberen Ende jeweils eine Aufnahme 62a auf. Die Aufnahmen 62a sind dabei jeweils von zwei Durchgangslöchern gebildet. An einem unteren Ende weisen die als Sitzfüße ausgebildeten zweiten Flugzeugsitzelemente 44a, 46a, 48a, 50a jeweils nicht weiter detailliert dargestellte oder beschriebene Verbindungselemente auf, über die die als Sitzfüße ausgebildeten zweiten Flugzeugsitzelemente 44a, 46a, 48a, 50a mit in den Kabinenboden eingebrachten Verbindungselementen verbunden werden können. Die Verbindungselemente des Kabinenbodens sind dabei vorzugsweise als Anbindungsschienen ausgebildet. Die Verbindungselemente der als Sitzfüße ausgebildeten zweiten Flugzeugsitzelemente 44a, 46a, 48a, 50a sind als Fittinge ausgebildet, die in die als Anbindungsschienen ausgebildeten Verbindungselemente zur Aufständerung der Flugzeugsitzreihe 56a formschlüssig eingreifen. Grundsätzlich ist es auch denkbar, dass die als Sitzfüße ausgebildeten zweiten Flugzeugsitzelemente 44a, 46a, 48a, 50a anders ausgebildete Verbindungselemente aufweisen, die die zweiten Flugzeugsitzelemente 44a, 46a, 48a, 50a auf eine andere Art fest auf einer Aufständerebene befestigen. Die zwei als vordere Sitzfüße ausgebildeten zweiten Flugzeugsitzelemente 44a, 46a sind als im Wesentlichen gerade Profile ausgebildet, die sich in einem montierten Zustand von dem ersten Trägerprofil 10a im Wesentlichen senkrecht nach unten erstrecken. Die zwei als hintere Sitzfüße ausgebildeten zweiten Flugzeugsitzelemente 48a, 50a sind als gekrümmte Profile ausgebildet, die sich von dem zweiten Trägerprofil 12a sowohl nach unten als auch nach hinten, also von dem ersten Trägerprofil 10a weg erstrecken. Dabei ist jeweils eines der als vorderer Sitzfuß ausgebildeten zweiten Flugzeugsitzelemente 44a, 46a parallel zu einem der als hinterer Sitzfuß ausgebildeten zweiten Flugzeugsitzelemente 48a, 50a ausgerichtet. Das als vorderer Sitzfuß ausgebildete zweite Flugzeugsitzelement 44a, 46a und das als hinterer Sitzfuß ausgebildete zweite Flugzeugsitzelement 48a, 50a, die parallel zueinander ausgerichtet sind, sind jeweils mittels einer Verbindungsstange 64a, 66a an einem unteren Ende miteinander verbunden. Grundsätzlich ist es auch denkbar, dass zwei parallel zueinander angeordnete, als Sitzfüße ausgebildete Flugzeugsitzelemente 44a, 46a, 48a, 50a oder alle als Sitzfüße ausgebildeten Flugzeugsitzelemente 44a, 46a, 48a, 50a integral als ein einstückiger Sitzfuß ausgebildet sind.

Die Flugzeugsitzaufständervorrichtung umfasst ein erstes Zwischenelement 20a und ein zweites Zwischenelement 22a. Die Zwischenelemente 20a, 22a umschließen das erste, als vorderes Querrohr ausgebildete Trägerprofil 10a komplett. Grundsätzlich wäre es auch denkbar, dass die Zwischenelemente 20a, 22a das erste Trägerprofil 10a in Umfangsrichtung nur teilweise umschließen. Die Zwischenelemente 20a, 22a sind dabei als Rohrelemente ausgebildet. Die als Rohrelemente ausgebildeten Zwischenelemente 20a, 22a sind dabei aus einem Faserverbundwerkstoff gebildet. Grundsätzlich ist es auch denkbar, dass die Zwischenelemente 20a, 22a aus einem anderen Material, wie vorzugsweise einem Leichtmetall, wie beispielsweise einem Aluminium, gebildet sind. Das erste Zwischenelement 20a ist mit dem ersten, als Sitzteiler ausgebildeten ersten Flugzeugsitzelement 14a gekoppelt. Außerdem ist das erste Zwischenelement 20a mit dem einen, als vorderer Sitzfuß ausgebildeten zweiten Flugzeugsitzelement 44a verbunden. Das erste Zwischenelement 20a ist zur Anbindung des als Sitzteiler ausgebildeten ersten Flugzeugsitzelements 14a und des als vorderer Sitzfuß ausgebildeten zweiten Flugzeugsitzelements 44a an das als vorderes Querrohr ausgebildete erste Trägerprofil 10a vorgesehen. Über das erste Zwischenelement 20a sind das erste Flugzeugsitzelement 14a und das zweite Flugzeugsitzelement 44a mit dem ersten Trägerprofil 10a verbunden. Das zweite Zwischenelement 22a ist zur Anbindung des anderen ersten, als Sitzteiler ausgebildeten Flugzeugsitzelements 16a und des anderen, als vorderer Sitzfuß ausgebildeten zweiten Flugzeugsitzelements 46a an das als vorderes Querrohr ausgebildete erste Trägerprofil 10a vorgesehen. Über das zweite Zwischenelement 22a sind das erste Flugzeugsitzelement 16a und das zweite Flugzeugsitzelement 46a mit dem ersten Trägerprofil 10a verbunden. Eine Ausgestaltung des ersten Zwischenelements 20a und des zweiten Zwischenelements 22a sowie eine Anbindung des entsprechenden ersten Flugzeugsitzelements 14a, 16a und des entsprechenden zweiten Flugzeugsitzelements 44a, 46a an das entsprechende Zwischenelement 20a, 22a sind identisch, weswegen im Folgenden lediglich das erste Zwischenelement 20a und die Anbindung des entsprechenden ersten Flugzeugsitzelements 14a und des entsprechenden zweiten Flugzeugsitzelements 44a an das Zwischenelement 20a beschrieben werden. Eine Ausgestaltung des zweiten Zwischenelements 22a und eine Anbindung der entsprechenden Flugzeugsitzelemente 16a, 46a an dieses Zwischenelement 22a können dabei der Beschreibung des ersten Zwischenelements 20a entnommen werden.

Das Zwischenelement 20a umschließt das erste Trägerprofil. Dabei liegt das Zwischenelement 20a mit einer Innenseite auf einer Außenseite des Trägerprofils 10a an. In einem Crashfall/Verformungsfall ist das Zwischenelement 20a drehbar zu dem Trägerprofil 10a angeordnet. In einem Crashfall/Verformungsfall kann sich das Zwischenelement 20a bei einer Krafteinwirkung um das Trägerprofil 10a drehen. Dadurch werden insbesondere Torsionsbelastungen auf das Trägerprofil 10a in einem Crashfall/Verformungsfall verhindert bzw. minimiert.

Zur Anbindung des ersten Flugzeugsitzelements 14a weist das Zwischenelement 20a einen ersten Anbindungsbock 52a auf. Über den ersten Anbindungsbock 52a ist das erste Flugzeugsitzelement 14a in einem montierten Zustand mit dem Zwischenelement 20a gekoppelt. Der erste Anbindungsbock 52a ist aus einem Kunststoff gebildet. Grundsätzlich ist es auch denkbar, dass der erste Anbindungsbock 52a aus einem anderen Material, wie beispielsweise Aluminium, gebildet ist. Der Anbindungsbock 52a erstreckt sich dabei in einem montierten Zustand in Richtung des ersten Flugzeugsitzelements 14a. Der Anbindungsbock 52a ist dabei stoffschlüssig mit dem Zwischenelement 20a verbunden. An einer ersten Seite weist der Anbindungsbock 52a einen Anbindungsbereich auf, über den der Anbindungsbock 52a mit dem Zwischenelement 20a verbunden ist. Dabei ist der Anbindungsbock 52a in dem Anbindungsbereich über eine Klebeverbindung mit einer Oberfläche des Zwischenelements 20a verbunden. Der Anbindungsbereich weist dabei eine Erstreckung in Umfangsrichtung auf, die kleiner ist als 180 Grad. Der Anbindungsbock 52a nimmt in Umfangsrichtung einen Bereich des Zwischenelements 20a von kleiner als 180 Grad ein. Grundsätzlich ist es auch denkbar, dass der Anbindungsbock 52a einstückig mit dem Zwischenelement 20a ausgebildet ist. An einem zweiten Ende weist der Anbindungsbock 52a eine Aufnahme 68a auf. Die Aufnahme 68a ist zur Anbindung des ersten Flugzeugsitzelements 14a an den Anbindungsbock 52a vorgesehen. Die Aufnahme 68a ist von zwei beabstandet angeordneten Platten 70a, 72a gebildet, die jeweils ein Aufnahmeloch aufweisen, wobei die Aufnahmelöcher in einer Flucht zueinander ausgerichtet sind. Über ein als Schraube ausgebildetes Befestigungselement 74a, das durch die beiden Aufnahmelöcher der Aufnahme 68a geführt ist, und ein als Mutter ausgebildeten Befestigungselement, das mit dem als Schraube ausgebildeten Befestigungselement 74a verbunden ist, ist das erste Flugzeugsitzelement 14a an den Anbindungsbock 52a angebunden. Dazu ist das erste Flugzeugsitzelement 14a mit dem Durchgangsloch seiner Aufnahme 60a fluchtend zwischen den beiden Aufnahmelöchern der Aufnahme 68a des ersten Anbindungsbocks 52a ausgerichtet. Das als Schraube ausgebildete Befestigungselement 74a ist durch die Aufnahmelöcher der Aufnahme 68a des ersten Anbindungsbocks 52a und durch das Durchgangsloch der Aufnahme 60a des ersten Flugzeugsitzelements 14a geführt. Das als Schraube ausgebildete Befestigungselement 74a ist mit dem als Mutter ausgebildeten Befestigungselement in der Aufnahme 68a des ersten Anbindungsbocks 52a und der Aufnahme 60a des ersten Flugzeugsitzelements 14a fixiert. Grundsätzlich ist es auch denkbar, dass die Aufnahme 60a des ersten Anbindungsbocks 52a anders ausgebildet ist und das erste Flugzeugsitzelement 14a mittels einer anderen Befestigungsmethode an den ersten Anbindungsbock 52a angebunden ist. Dabei ist es denkbar, dass das Befestigungselement 74a zur formschlüssigen Anbindung des ersten Flugzeugsitzelements 14a beispielsweise als ein Bolzen oder Stift ausgebildet ist. Grundsätzlich ist es auch denkbar, dass das erste Flugzeugsitzelement 14a über mehrere Befestigungselemente 74a an den Anbindungsbock 52a angebunden ist. Grundsätzlich ist es ebenfalls denkbar, dass das Flugzeugsitzelement 14a über ein anders ausgestaltetes Form- und/oder Kraftschlusselement mit dem Anbindungsbock 52a verbunden ist.

Zur Anbindung des zweiten Flugzeugsitzelements 44a weist das Zwischenelement 20a einen zweiten Anbindungsbock 54a auf. Über den zweiten Anbindungsbock 54a ist das zweite Flugzeugsitzelement 44a in einem montierten Zustand mit dem Zwischenelement 20a gekoppelt. Der zweite Anbindungsbock 54a ist aus einem Kunststoff gebildet. Grundsätzlich ist es auch denkbar, dass der zweite Anbindungsbock 54a ebenfalls aus einem anderen Material, wie beispielsweise Aluminium, gebildet ist. Der zweite Anbindungsbock 54a erstreckt sich dabei in einem montierten Zustand nach unten in Richtung des zweiten Flugzeugsitzelements 44a. Der zweite Anbindungsbock 54a ist dabei stoffschlüssig mit dem Zwischenelement 20a verbunden. An einer ersten Seite weist der zweite Anbindungsbock 54a einen Anbindungsbereich auf, über den der zweite Anbindungsbock 54a mit dem Zwischenelement 20a verbunden ist. Dabei ist der zweite Anbindungsbock 54a in dem Anbindungsbereich über eine Klebeverbindung mit einer Oberfläche des Zwischenelements 20a verbunden. Der Anbindungsbereich des zweiten Anbindungsbocks 54a weist dabei eine Erstreckung in Umfangsrichtung auf, die kleiner ist als 180 Grad. Der zweite Anbindungsbock 54a ist dabei in einer Axialrichtung zu dem ersten Anbindungsbock 52a verschoben. Durch die Ausgestaltung der Anbindungsbereiche der Anbindungsböcke 52a, 54a, die jeweils eine Erstreckung in Umfangsrichtung von weniger als 180 Grad aufweisen, wäre es auch denkbar, dass der erste Anbindungsbock 52a und der zweite Anbindungsbock 54a in einer gleichen axialen Position auf dem Zwischenelement 20a angeordnet sind. Die beiden Anbindungsböcke 52a, 54a wären dabei in Umfangsrichtung des Zwischenelements 20a hintereinander angeordnet. Dadurch könnten das erste Flugzeugsitzelement 14a und das zweite Flugzeugsitzelement 44a in einer gleichen axialen Position an das Trägerprofil 10a angebracht werden. An einem zweiten Ende weist der zweite Anbindungsbock 54a eine Aufnahme 76a auf. Die Aufnahme 76a ist zur Anbindung des zweiten Flugzeugsitzelements 44a an den zweiten Anbindungsbock 54a vorgesehen. Die Aufnahme 76a ist von zwei beabstandet angeordneten Platten 78a, 80a gebildet, die jeweils zwei Aufnahmelöcher aufweisen, wobei die beiden Aufnahmelöcher in der einen Platte 78a, 80a jeweils in einer Flucht zu einem der Aufnahmelöcher der anderen Platte 78a, 80a ausgerichtet sind. Durch zwei als Schrauben ausgebildete Befestigungselemente 82a, 84a und zwei als Muttern ausgebildete Befestigungselemente ist das zweite Flugzeugsitzelement 44a mit seiner Aufnahme 62a an die Aufnahme 76a des zweiten Anbindungsbocks 54a angebunden. Dadurch ist das als Sitzfuß ausgebildete zweite Flugzeugsitzelement 44a fest mit dem Zwischenelement 20a verbunden. Dabei ist es denkbar, dass der zweite Anbindungsbock 54a wie der erste Anbindungsbock 52a auf eine andere Art und Weise zur Befestigung des Flugzeugsitzelements 44a ausgestaltet sein kann.

Das Zwischenelement 20a ist in einer Axialrichtung zu dem Trägerprofil 10a, auf dem es angeordnet ist, fixiert. Außerdem ist das Zwischenelement 20a in einem normalen Betriebszustand der Flugzeugsitzaufständervorrichtung drehfest zu dem Trägerprofil 10a angeordnet. Das Zwischenelement 20a ist dabei bis zu einer definierten Maximallast gegen ein Verdrehen gesichert. Das Zwischenelement 20a ist in einem montierten und betriebsbereiten Betriebszustand mittels einer Klebeverbindung mit dem Trägerprofil 10a verbunden. Zwischen einer Außenseite des Trägerprofils 10a und einer Innenseite des Zwischenelements 20a ist eine Klebeschicht angeordnet, die das Trägerprofil 10a und das Zwischenelement 20a über eine adhäsive Verbindung miteinander verbindet. Über die Klebeverbindung ist das Zwischenelement 20a in einem normalen Betriebszustand der Flugzeugsitzaufständervorrichtung axial fixiert. Außerdem ist das Zwischenelement 20a über die Klebeverbindung drehfest auf dem Trägerprofil 10a angeordnet. Das Zwischenelement 20a ist in dem normalen Betriebszustand der Flugzeugsitzaufständervorrichtung fest auf dem Trägerprofil 10a fixiert. Grundsätzlich ist es auch denkbar, dass das Zwischenelement 20a zur axialen und/oder rotatorischen Sicherung auf eine andere form- und/oder kraftschlüssige Weise mit dem Trägerprofil 10a gekoppelt ist, beispielsweise über eine Formschlussverbindung, wie beispielsweise durch einen in das Trägerprofil 10a und das Zwischenelement 20a formschlüssig eingreifenden Stift.

Wie zuvor beschrieben, ist das Zwischenelement 20a in einem normalen Betriebszustand der Flugzeugsitzaufständervorrichtung drehfest und axial fixiert auf dem Trägerprofil 10a angeordnet. Der normale Betriebszustand ist von einem Betriebszustand gebildet, in dem die Flugzeugsitzreihe 56a, deren Teil die Flugzeugsitzaufständervorrichtung ist, in einem Flugzeug aufgeständert ist. Dabei können Personen auf Flugzeugsitzen 58a der Flugzeugsitzreihe 56a sitzen, wodurch Kräfte über den Sitzboden und die Rückenlehne in den Flugzeugsitz 58a und damit die Flugzeugsitzaufständervorrichtung eingeleitet werden. Kräfte, die in das erste, als Sitzteiler ausgebildete Flugzeugsitzelement 14a eingeleitet werden, werden über das Zwischenelement 20a in das zweite, als Sitzfuß ausgebildete Flugzeugsitzelement 44a eingeleitet. Ein durch die auf das Zwischenelement 20a eingeleiteten Kräfte entstehendes Moment, das auf das Zwischenelement 20a wirkt, wird durch die Verbindung zwischen dem Zwischenelement 20a und dem Trägerprofil 10a gegen das Trägerprofil 10a abgestützt. In einem Crashfall/Verformungsfall, in dem Beschleunigungskräfte auf die Flugzeugsitze 58a der Flugzeugsitzreihe 56a einwirken, die über zugelassene Beschleunigungskräfte hinausgehen, und die Maximallast überstiegen wird, gegen die das Zwischenelement 20a gegen ein Verdrehen gesichert ist, schert die Klebeverbindung zwischen dem Zwischenelement 20a und dem Trägerprofil 10a ab und das Zwischenelement 20a ist zu dem Trägerprofil 10a drehbar. Dadurch kann eine Torsionsbelastung in dem Crashfall/Verformungsfall, die über die Flugzeugsitzelemente 14a, 44a auf das Trägerprofil 10a eingeleitet wird, auf ein Maximum begrenzt werden. Das geschieht dadurch, dass die Klebeverbindung bei einer bestimmten Belastung abschert, sich das Zwischenelement 20a zu dem Trägerprofil 10a drehen kann und so eine Einleitung eines Torsionsmoments von den Flugzeugsitzelementen 14a, 44a über das Zwischenelement 20a in das Trägerprofil 10a verhindert wird. Dadurch kann das Trägerprofil 10a besonders leicht und materialsparend ausgebildet werden, da es für den Crashfall/Verformungsfall nicht gegen Torsionsbelastungen durch die Flugzeugsitzelemente 14a, 44a ausgelegt werden muss.

Zur Anbindung der ersten Flugzeugsitzelemente 14a, 16a und der zweiten Flugzeugsitzelemente 48a, 50a an das zweite Trägerprofil 12a weist die Flugzeugsitzaufständervorrichtung zwei weitere Zwischenelemente 24a, 26a auf. Die zwei weiteren Zwischenelemente 24a, 26a sind im Wesentlichen gleich ausgebildet wie die Zwischenelemente 20a, 22a zur Anbindung der Flugzeugsitzelemente 14a, 16a an das erste Trägerprofil 10a. Die Flugzeugsitzelemente 14a, 16a sind dabei ebenfalls über nicht näher beschriebene Anbindungsböcke 98a, 100a an die Zwischenelemente 24a, 26a angebunden, wobei wieder jeweils ein erstes Flugzeugsitzelement 14a, 16a und ein zweites Flugzeugsitzelement 48a, 50a an ein Zwischenelement 24a, 26a angebunden sind. Zur Anbindung der äußeren ersten Flugzeugsitzelemente 18a, 42a weist die Flugzeugsitzaufständervorrichtung je Flugzeugsitzelement 18a, 42a jeweils ein Zwischenelement 28a, 32a zur Anbindung an das erste Trägerprofil 10a und jeweils ein Zwischenelement 30a, 34a zur Anbindung an das zweite Trägerprofil 12a auf. Die Zwischenelemente 28a, 30a, 32a, 34a sind äquivalent zu den anderen Zwischenelementen 20a, 22a, 24a, 26a ausgebildet, weisen aber jeweils lediglich einen nicht näher dargestellten Anbindungsbock auf, um das entsprechende Flugzeugsitzelement 18a, 42a an das entsprechende Zwischenelement 28a, 30a, 32a, 34a und dadurch das entsprechende Trägerprofil 10a, 12a anzubinden. Die Zwischenelemente 28a, 30a, 32a, 34a sind äquivalent zu den anderen Zwischenelementen 20a, 22a, 24a, 26a mit den entsprechenden Trägerprofilen 10a, 12a verbunden.

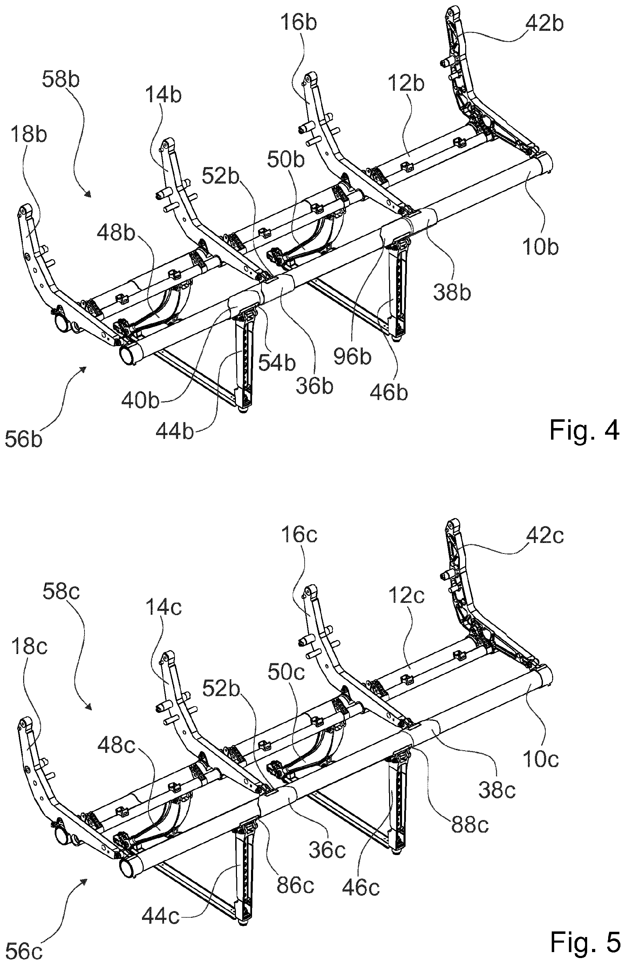

In Fig. 4 bis 6 sind drei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 3, verwiesen werden kann. Zur Unterscheidung der Ausführungsbeispiele ist der Buchstabe a den Bezugszeichen des Ausführungsbeispiels in Fig. 1 bis 3 nachgestellt. In den Ausführungsbeispielen der Fig. 4 bis 6 ist der Buchstabe a durch die Buchstaben b bis d ersetzt.

Figur 4 zeigt ein zweites Ausführungsbeispiel einer erfindungsgemäßen Flugzeugsitzaufständervorrichtung. Die Flugzeugsitzaufständervorrichtung ist Teil einer lediglich teilweise dargestellten Flugzeugsitzreihe 56b. Die Flugzeugsitzreihe 56b umfasst dabei drei Flugzeugsitze 58b. Die Flugzeugsitzaufständervorrichtung umfasst ein erstes Trägerprofil 10b. Das erste Trägerprofil 10b ist als ein vorderes Querrohr ausgebildet. Die Flugzeugsitzaufständervorrichtung umfasst weiter ein zweites Trägerprofil 12b. Das zweite Trägerprofil 12b ist als ein hinteres Querrohr ausgebildet. Die Trägerprofile 10b, 12b sind aus einem Leichtmetall gebildet. Dabei sind die Trägerprofile 10b, 12b aus einem Aluminium gebildet. Grundsätzlich ist es auch denkbar, dass die Trägerprofile 10b, 12b aus einem anderen Leichtmaterial gebildet sind, wie beispielsweise aus einem Magnesium oder Titan.

Die Flugzeugsitzaufständervorrichtung umfasst vier erste Flugzeugsitzelemente 14b, 16b, 18b, 42b. Die ersten Flugzeugsitzelemente 14b, 16b, 18b, 42b sind jeweils als ein Sitzteiler ausgebildet. Die als Sitzteiler ausgebildeten ersten Flugzeugsitzelemente 14b, 16b, 18b, 42b begrenzen jeweils einen Sitzbereich eines Flugzeugsitzes 58b. Die als Sitzteiler ausgebildeten ersten Flugzeugsitzelemente 14b, 16b, 18b, 42b sind dabei im Wesentlichen gleich ausgebildet wie die des ersten Ausführungsbeispiels aus den Figuren 1 bis 3. Die Flugzeugsitzaufständervorrichtung umfasst vier zweite Flugzeugsitzelemente 44b, 46b, 48b, 50b. Die zweiten Flugzeugsitzelemente 44b, 46b, 48b, 50b sind dabei jeweils als ein Sitzfuß ausgebildet. Die als Sitzfüße ausgebildeten zweiten Flugzeugsitzelemente 44b, 46b, 48b, 50b sind dazu vorgesehen, die Flugzeugsitzaufständervorrichtung und damit die Flugzeugsitzreihe 56b auf die Aufständerebene aufzuständern. Die zweiten Flugzeugsitzelemente 44b, 46b, 48b, 50b sind dabei im Wesentlichen gleich ausgebildet wie in dem ersten Ausführungsbeispiel aus den Figuren 1 bis 3.

Die Flugzeugsitzaufständervorrichtung umfasst zwei erste Zwischenelemente 36b, 38b und zwei zweite Zwischenelemente 40b, 96b. Die Zwischenelemente 36b, 38b, 40b, 96b sind dabei wie in dem ersten Ausführungsbeispiel als Rohrelemente ausgebildet. Im Unterschied zu den Zwischenelementen des ersten Ausführungsbeispiels ist mit den ersten und zweiten Zwischenelementen 36b, 38b, 40b, 96b jeweils lediglich ein Flugzeugsitzelement 14b, 16b, 44b, 46b gekoppelt. Eine Ausgestaltung der beiden ersten Zwischenelemente 36b, 38b und eine Ausgestaltung der beiden zweiten Zwischenelemente 40b, 96b sowie eine Anbindung des entsprechenden ersten Flugzeugsitzelements 14b, 16b oder des entsprechenden zweiten Flugzeugsitzelements 44b, 46b an das entsprechende Zwischenelement 36b, 38b, 40b, 96b sind identisch, weswegen im Folgenden lediglich ein erstes Zwischenelement 36b und ein zweites Zwischenelement 40b sowie die Anbindung des entsprechenden ersten Flugzeugsitzelements 14b, 16b bzw. des entsprechenden zweiten Flugzeugsitzelements 44b, 46b an das entsprechende Zwischenelement 36b, 38b, 40b, 96b beschrieben wird. Hieraus kann eine Beschreibung des entsprechenden anderen Zwischenelements 38b, 96b abgeleitet werden.

Das erste Zwischenelement 36b ist zur Anbindung des ersten Flugzeugsitzelements 14b an das Trägerprofil 10b vorgesehen. Dazu weist das erste Zwischenelement 36b einen Anbindungsbock 52b auf. Der eine Anbindungsbock 52b ist ausgebildet wie der entsprechende Anbindungsbock zur Anbindung des ersten Flugzeugsitzelements aus dem ersten Ausführungsbeispiel der Figuren 1 bis 3. Das erste Flugzeugsitzelement 14b ist in einem voll montierten Zustand über eine Schraubenverbindung mit dem ersten Zwischenelement 36b verbunden und damit mit dem ersten Trägerprofil 10b gekoppelt. Das erste Zwischenelement 36b ist dabei wie die Zwischenelemente aus dem ersten Ausführungsbeispiel mittels einer Klebeverbindung mit dem Trägerprofil verbunden.

Das zweite Zwischenelement 40b ist zur Anbindung des zweiten Flugzeugsitzelements 44b an das Trägerprofil 10b vorgesehen. Dazu weist das zweite Zwischenelement 40b einen Anbindungsbock 54b auf. Der eine Anbindungsbock 54b ist ausgebildet wie der entsprechende Anbindungsbock zur Anbindung des zweiten Flugzeugsitzelements aus dem ersten Ausführungsbeispiel der Figuren 1 bis 3. Das zweite Flugzeugsitzelement 44b ist in einem voll montierten Zustand über eine Schraubenverbindung mit dem zweiten Zwischenelement 40b verbunden und damit mit dem ersten Trägerprofil 10b gekoppelt. Das erste Zwischenelement 40b ist dabei wie die Zwischenelemente aus dem ersten Ausführungsbeispiel mittels einer Klebeverbindung mit dem Trägerprofil verbunden. Dabei ist das zweite Zwischenelement 40b beabstandet zu dem ersten Zwischenelement 36b angeordnet. Das erste Zwischenelement 36b und das zweite Zwischenelement 40b sind dabei unabhängig voneinander. Dabei ist es grundsätzlich denkbar, dass die beiden Zwischenelemente 36b, 40b mit unterschiedlich starken Klebeverbindungen mit dem Trägerprofil 10b verbunden sind, sodass diese ab unterschiedlich großen Belastungen drehbar zu dem Trägerprofil 10b sind.

Figur 5 zeigt ein drittes Ausführungsbeispiel einer erfindungsgemäßen Flugzeugsitzaufständervorrichtung. Die Flugzeugsitzaufständervorrichtung ist Teil einer lediglich teilweise dargestellten Flugzeugsitzreihe 56c. Die Flugzeugsitzreihe 56c umfasst dabei drei Flugzeugsitze 58c. Die Flugzeugsitzaufständervorrichtung umfasst ein erstes Trägerprofil 10c. Das erste Trägerprofil 10c ist als ein vorderes Querrohr ausgebildet. Die Flugzeugsitzaufständervorrichtung umfasst weiter ein zweites Trägerprofil 12c. Das zweite Trägerprofil 12c ist als ein hinteres Querrohr ausgebildet. Die Trägerprofile 10c, 12c sind aus einem Leichtmetall gebildet.

Die Flugzeugsitzaufständervorrichtung umfasst vier erste Flugzeugsitzelemente 14c, 16c, 18c, 42c. Die ersten Flugzeugsitzelemente 14c, 16c, 18c, 42c sind jeweils als ein Sitzteiler ausgebildet. Die als Sitzteiler ausgebildeten ersten Flugzeugsitzelemente 14c, 16c, 18c, 42c begrenzen jeweils einen Sitzbereich eines Flugzeugsitzes 58c. Die als Sitzteiler ausgebildeten ersten Flugzeugsitzelemente 14c, 16c, 18c, 42c sind dabei im Wesentlichen gleich ausgebildet wie die des ersten Ausführungsbeispiels aus den Figuren 1 bis 3. Die Flugzeugsitzaufständervorrichtung umfasst vier zweite Flugzeugsitzelemente 44c, 46c, 48c, 50c. Die zweiten Flugzeugsitzelemente 44c, 46c, 48c, 50c sind dabei jeweils als ein Sitzfuß ausgebildet. Die als Sitzfüße ausgebildeten zweiten Flugzeugsitzelemente 44c, 46c, 48c, 50c sind dazu vorgesehen, die Flugzeugsitzaufständervorrichtung und damit die Flugzeugsitzreihe 56c auf die Aufständerebene aufzuständern. Die zweiten Flugzeugsitzelemente 44c, 46c, 48c, 50c sind dabei im Wesentlichen gleich ausgebildet wie in dem ersten Ausführungsbeispiel aus den Figuren 1 bis 3.

Die Flugzeugsitzaufständervorrichtung umfasst zwei erste Zwischenelemente 36c, 38c. Die zwei ersten Zwischenelemente 36c, 38c sind dabei äquivalent zu den zwei ersten Zwischenelementen aus dem zweiten Ausführungsbeispiel der Figur 4 ausgebildet. Die zwei ersten Zwischenelemente 36c, 38c sind dabei dazu vorgesehen, jeweils ein erstes, als Sitzteiler ausgebildetes Flugzeugsitzelement 14c, 16c an das Trägerprofil 10c anzubinden. Dazu ist jeweils ein als Sitzteiler ausgebildetes erstes Flugzeugsitzelement 14c, 16c über einen Anbindungsbock 52c mit dem entsprechenden Zwischenelement 36c, 38c gekoppelt.

Die als Sitzfuß ausgebildeten zweiten Flugzeugsitzelemente 44c, 46c sind direkt mit dem Trägerprofil 10c gekoppelt. Dazu bildet das Trägerprofil 10c jeweils einen Anbindungsbock 86c, 88c aus, über den die zweiten Flugzeugsitzelemente 44c, 46c fest mit dem Trägerprofil 10c verbunden sind. Dabei entfällt zwischen den zweiten Flugzeugsitzelementen 44c, 46c und dem Trägerprofil 10c ein Zwischenelement, welches in einem Crashfall/Verformungsfall drehbar zu dem Trägerprofil 10c ausgebildet ist. Grundsätzlich ist es dabei auch denkbar, dass die als Sitzfuß ausgebildeten zweiten Flugzeugsitzelemente 44c, 46c, wie aus dem Stand der Technik bekannt, umschlungen an das Trägerprofil 10c angebunden sind.

Grundsätzlich wäre auch eine Ausgestaltung denkbar, in der eine Anbindung der ersten Flugzeugsitzelemente 14c, 16c und der zweiten Flugzeugsitzelemente 44c, 46c umgekehrt zu der oben beschriebenen ausgeführt ist. Dabei wären die als Sitzteiler ausgebildeten ersten Flugzeugsitzelemente 14c, 16c über eine Umschlingung oder einen von dem Trägerprofil 10c ausgebildeten Anbindungsbock direkt und starr mit dem Trägerprofil 10c verbunden und die als Sitzfüße ausgebildeten zweiten Flugzeugsitzelemente 44c, 46c über zwei Zwischenelemente mit dem Trägerprofil 10c verbunden, und dadurch in zumindest einem Crashfall/Verformungsfall drehbar zu dem Trägerprofil 10c angeordnet.

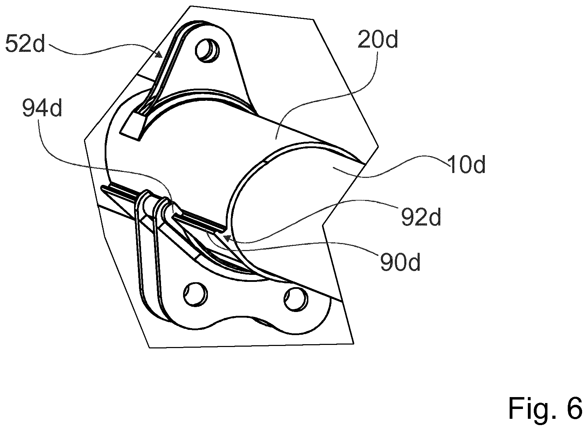

Figur 6 zeigt ein viertes Ausführungsbeispiel einer erfindungsgemäßen Flugzeugsitzaufständervorrichtung. Die Flugzeugsitzaufständervorrichtung ist Teil einer lediglich teilweise dargestellten Flugzeugsitzreihe 56d. Die Flugzeugsitzreihe 56d umfasst dabei drei Flugzeugsitze 58d. Die Flugzeugsitzaufständervorrichtung umfasst ein erstes Trägerprofil 10d. Das erste Trägerprofil 10d ist als ein vorderes Querrohr ausgebildet. Die Flugzeugsitzaufständervorrichtung umfasst weiter ein zweites Trägerprofil, das nicht näher dargestellt ist. Die Trägerprofile sind aus einem Leichtmetall gebildet. Die Flugzeugsitzvorrichtung weist wie die anderen Ausführungsbeispiele erste und zweite Flugzeugsitzelemente auf, die hier nicht näher dargestellt sind.

Die Flugzeugsitzaufständervorrichtung umfasst äquivalent zu dem ersten Ausführungsbeispiel ein erstes Zwischenelement 20d und ein zweites Zwischenelement, wobei lediglich das erste Zwischenelement 20d dargestellt und im Folgenden beschrieben ist. Das zweite, nicht näher dargestellte Zwischenelement ist äquivalent ausgebildet. Das Zwischenelement 20d ist im Unterschied zu dem ersten Ausführungsbeispiel teilweise anders ausgeführt. Äquivalent zu dem ersten Ausführungsbeispiel weist das Zwischenelement 20d zur Anbindung eines ersten Flugzeugsitzelements einen ersten Anbindungsbock 52d auf, der mittels einer Klebeverbindung mit dem Zwischenelement 20d verbunden ist. Der erste Anbindungsbock 52d ist gleich ausgebildet wie der entsprechende Anbindungsbock des ersten Ausführungsbeispiels. Zur Anbindung des als Sitzfuß ausgebildeten zweiten Flugzeugsitzelements weist das Zwischenelement 20d einen zweiten Anbindungsbock 54d auf, der sich von dem des ersten Ausführungsbeispiels unterscheidet. Der zweite Anbindungsbock 54d ist über eine Klebeverbindung und eine Formschlussverbindung mit dem Zwischenelement 20d verbunden. Grundsätzlich wäre es auch denkbar, dass der zweite Anbindungsbock 54d lediglich über eine Formschlussverbindung mit dem zweiten Zwischenelement 20d verbunden ist. Zur formschlüssigen Anbindung des Anbindungsbocks 54d bildet das Zwischenelement 20d ein Formschlusselement 90d aus. Das Formschlusselement 90d des Zwischenelements 20d ist als eine Erhebung mit einem Hinterschnitt 92d ausgebildet. Der Anbindungsbock 54d bildet ein korrespondierend zu dem Formschlusselement 90d des Zwischenelements 20d ausgebildetes Formschlusselement 94d aus. Das Formschlusselement 94d des Anbindungsbocks 54d ist als ein Haken ausgebildet. Das als Haken ausgebildete Formschlusselement 94d greift in einem montierten Zustand in das Formschlusselement 90d des Zwischenelements 20d ein. Dadurch kann eine besonders feste und starre Verbindung zwischen dem Zwischenelement 20d und dem zweiten Anbindungsbock 54d erreicht werden. Dadurch kann das als Sitzfuß ausgebildete zweite Flugzeugsitzelement besonders fest und sicher mit dem Zwischenelement 20d verbunden und dadurch an das Trägerprofil 10d angebunden werden. Die Klebeverbindung zwischen dem Zwischenelement 20d und dem zweiten Anbindungsbock 54d wird durch die formschlüssige Verbindung des Formschlusselements 94d des Anbindungsbocks 54d und des Formschlusselements 90d des Zwischenelements 20d vorteilhaft verstärkt.

### Bezugszeichen

- 10: Trägerprofil
- 12: Trägerprofil
- 14: Flugzeugsitzelement
- 16: Flugzeugsitzelement
- 18: Flugzeugsitzelement
- 20: Zwischenelement
- 22: Zwischenelement
- 24: Zwischenelement
- 26: Zwischenelement
- 28: Zwischenelement
- 30: Zwischenelement
- 32: Zwischenelement
- 34: Zwischenelement
- 36: Zwischenelement
- 38: Zwischenelement
- 40: Zwischenelement
- 42: Flugzeugsitzelement
- 44: Flugzeugsitzelement
- 46: Flugzeugsitzelement
- 48: Flugzeugsitzelement
- 50: Flugzeugsitzelement
- 52: Anbindungsbock
- 54: Anbindungsbock
- 56: Flugzeugsitzreihe
- 58: Flugzeugsitz
- 60: Aufnahme
- 62: Aufnahme
- 64: Verbindungsstange
- 66: Verbindungsstange
- 68: Aufnahme
- 70: Platte
- 72: Platte
- 74: Befestigungselement
- 76: Aufnahme
- 78: Platte
- 80: Platte
- 82: Befestigungselement
- 84: Befestigungselement
- 86: Anbindungsbock
- 88: Anbindungsbock
- 90: Formschlusselement
- 92: Hinterschnitt
- 94: Formschlusselement
- 96: Zwischenelement
- 98: Anbindungsbock
- 100: Anbindungsbock

## Patentansprüche

1. Flugzeugsitzaufständervorrichtung mit zumindest einem Trägerprofil (10a, 12a; 10b, 12b; 10c, 12c; 10d), mit zumindest einem als Sitzteiler oder als Sitzfuß ausgebildeten Flugzeugsitzelement (14a, 16a, 18a, 42a, 44a, 46a, 48a, 50a; 14b, 16b, 18b, 42b; 14c, 16c, 18c, 42c) und mit zumindest einem Zwischenelement (20a, 22a, 24a, 26a, 28a, 30a, 32a, 34a; 36b, 38b, 40b, 96b; 36c, 40c; 20d), das das zumindest eine Trägerprofil (10a, 12a; 10b, 12b; 10c, 12c; 10d) zumindest im Wesentlichen umschließt und mit dem zumindest einen Flugzeugsitzelement (14a, 16a, 18a, 42a, 44a, 46a, 48a, 50a; 14b, 16b, 18b, 42b; 14c, 16c, 18c, 42c) gekoppelt ist, das Zwischenelement ist in einer Axialrichtung zu dem Trägerprofil, auf dem es angeordnet ist, fixiert, wobei in einem normalen Betriebszustand, in dem das Zwischenelement (20a, 22a, 24a, 26a, 28a, 30a, 32a, 34a; 36b, 38b, 40b, 96b; 36c, 40c; 20d) drehfest zu dem Trägerprofil (10a, 12a; 10b, 12b; 10c, 12c; 10d) angeordnet ist, wobei das Zwischenelement (20a, 22a, 24a, 26a, 28a, 30a, 32a, 34a; 36b, 38b, 40b, 96b; 36c, 40c; 20d) bis zu einer definierten Maximallast gegen ein Verdrehen gesichert ist, wobei das Zwischenelement (20a, 22a, 24a, 26a, 28a, 30a, 32a, 34a; 36b, 38b, 40b, 96b; 36c, 40c; 20d) zumindest in einem Crashfall/Verformungsfall drehbar zu dem Trägerprofil (10a, 12a; 10b, 12b; 10c, 12c; 10d) angeordnet ist, wodurch Torsionsbelastungen auf das Trägerprofil (10a, 12a; 10b, 12b; 10c, 12c; 10d) verhindert bzw. minimiert werden.

2. Flugzeugsitzaufständervorrichtung nach Anspruch 1, **dadurch gekennzeichnet, dass** das Zwischenelement (20a, 22a, 24a, 26a, 28a, 30a, 32a, 34a; 36b, 38b, 40b, 96b; 36c, 40c; 20d) in dem normalen Betriebszustand über eine Klebeverbindung axial fixiert und drehfest auf dem Trägerprofil (10a, 12a; 10b, 12b; 10c, 12c; 10d) angeordnet ist.

3. Flugzeugsitzaufständervorrichtung nach Anspruch 1 oder 2, **gekennzeichnet durch** zumindest ein weiteres Flugzeugsitzelement (44a, 46a, 48a, 50a), das mit dem Zwischenelement (20a, 22a, 24a, 26a) gekoppelt ist.

4. Flugzeugsitzaufständervorrichtung nach einem der vorhergehenden Ansprüche, **dadurch gekennzeichnet, dass** das Zwischenelement (20a, 22a, 24a, 26a, 28a, 30a, 32a, 34a; 36b, 38b; 36c, 40c) zumindest einen Anbindungsbock (52a, 54a; 52b, 54b; 52c; 52d, 54d) aufweist, über den das Flugzeugsitzelement (14a, 16a, 18a, 42a, 44a, 46a, 48a, 50a; 14b, 16b, 18b, 42b; 14c, 16c, 18c, 42c) mit dem Zwischenelement (20a, 22a, 24a, 26a, 28a, 30a, 32a, 34a; 36b, 38b; 36c, 40c) gekoppelt ist.

5. Flugzeugsitzaufständervorrichtung nach Anspruch 4, **dadurch gekennzeichnet, dass** der Anbindungsbock (52a, 54a; 52b, 54b; 52c; 52d, 54d) stoffschlüssig mit dem Zwischenelement (20a, 22a, 24a, 26a, 28a, 30a, 32a, 34a; 36b, 38b; 36c, 40c) gekoppelt ist.

6. Flugzeugsitzaufständervorrichtung nach Anspruch 4 oder 5, **dadurch gekennzeichnet, dass** der Anbindungsbock (52a, 54a; 52b, 54b; 52c; 52d, 54d) in einem Anbindungsbereich mit dem Zwischenelement (20a, 22a, 24a, 26a, 28a, 30a, 32a, 34a; 36b, 38b; 36c, 40c) eine Erstreckung in Umfangsrichtung aufweist, die kleiner ist als 180 Grad.

7. Flugzeugsitzaufständervorrichtung nach einem der vorhergehenden Ansprüche, **dadurch gekennzeichnet, dass** das zumindest eine Zwischenelement (20a, 22a, 24a, 26a, 28a, 30a, 32a, 34a; 36b, 38b; 36c, 40c) zumindest in einer Axialrichtung zu dem Trägerprofil (10a, 12a; 10b, 12b; 10c, 12c; 10d) fixiert ist.

8. Flugzeugsitzaufständervorrichtung nach einem der vorhergehenden Ansprüche, **dadurch gekennzeichnet, dass** das Zwischenelement (20a, 22a, 24a, 26a, 28a, 30a, 32a, 34a; 36b, 38b; 36c, 40c) zumindest in einem Betriebszustand drehfest zu dem Trägerprofil (10a, 12a; 10b, 12b; 10c, 12c; 10d) angeordnet ist.

9. Flugzeugsitzaufständervorrichtung nach einem der vorhergehenden Ansprüche, **dadurch gekennzeichnet, dass** das Zwischenelement (20a, 22a, 24a, 26a, 28a, 30a, 32a, 34a; 36b, 38b; 36c, 40c; 20d) zumindest in einem Betriebszustand mittels einer Klebeverbindung fest mit dem Trägerprofil (10a, 12a; 10b, 12b; 10c, 12c; 10d) verbunden ist.

10. Flugzeugsitzaufständervorrichtung nach einem der vorhergehenden Ansprüche, **dadurch gekennzeichnet, dass** das Trägerprofil (10a, 12a; 10b, 12b; 10c, 12c; 10d) zumindest im Wesentlichen aus einem Leichtmetall und/oder einem Faserverbundwerkstoff gebildet ist.

11. Flugzeugsitzaufständervorrichtung zumindest nach Anspruch 1, **gekennzeichnet durch** zumindest ein zweites Zwischenelement (40b, 96b), wobei jeweils lediglich ein Flugzeugsitzelement (14b, 16b, 18b, 42b, 44b, 46b, 48b, 50b) mit einem der beiden Zwischenelemente (36b, 38b, 40b, 96b) gekoppelt ist.

12. Flugzeugsitzaufständervorrichtung zumindest nach Anspruch 1, **gekennzeichnet durch** zumindest ein weiteres Flugzeugsitzelement (44c, 46c), das direkt mit dem Trägerprofil (10c) gekoppelt ist.

13. Flugzeugsitz mit einer Flugzeugsitzaufständervorrichtung nach einem der vorhergehenden Ansprüche.

## Claims

1. Aircraft seat mounting device with at least one carrier profile (10a, 12a; 10b, 12b; 10c, 12c; 10d), with at least one aircraft seat element (14a, 16a, 18a, 42a, 44a, 46a, 48a, 50a; 14b, 16b, 18, 42b; 14c, 16c, 18c, 42c) embodied as a seat divider or as a seat base, and with at least one intermediary element (20a, 22a, 24a, 26a, 28a, 30a, 32a, 34a; 36b, 38b, 40b, 96b; 36c, 40c; 20d) which encompasses the at least one carrier profile (10a, 12a; 10b, 12b; 10c, 12c; 10d) at least substantially and which is coupled with the at least one aircraft seat element (14a, 16a, 18a, 42a, 44a, 46a, 48a, 50a; 14b, 16b, 18, 42b; 14c, 16c, 18c, 42c),
the intermediary element being fixated in an axial direction relative to the carrier profile which it is arranged on,
wherein in a normal operation state the intermediary element (20a, 22a, 24a, 26a, 28a, 30a, 32a, 34a; 36b, 38b, 40b, 96b; 36c, 40c; 20d) is arranged in a rotationally fixed manner relative to the carrier profile (10a, 12a; 10b, 12b; 10c, 12c; 10d), wherein the intermediary element (20a, 22a, 24a, 26a, 28a, 30a, 32a, 34a; 36b, 38b, 40b, 96b; 36c, 40c; 20d) is secured against a rotation until a defined maximal load is reached,
wherein at least in a case of crash/deformation, the intermediary element (20a, 22a, 24a, 26a, 28a, 30a, 32a, 34a; 36b, 38b, 40b, 96b; 36c, 40c; 20d) is arranged such that it is rotatable relative to the carrier profile (10a, 12a; 10b, 12b; 10c, 12c; 10d),
as a result of which torsion loads on the carrier profile (10a, 12a; 10b, 12b; 10c, 12c; 10d) are prevented or minimized.

2. Aircraft seat mounting device according to claim 1, **characterised in that** in the normal operation state the intermediary element (20a, 22a, 24a, 26a, 28a, 30a, 32a, 34a; 36b, 38b, 40b, 96b; 36c, 40c; 20d) is axially fixated via an adhesive bond and is arranged on the carrier profile (10a, 12a; 10b, 12b; 10c, 12c; 10d) in a rotationally fixed manner.

3. Aircraft seat mounting device according to claim 1 or 2, **characterised by** at least one further aircraft seat element (44a, 46a, 48a, 50a), which is coupled with the intermediary element (20a, 22a, 24a, 26a).

4. Aircraft seat mounting device according to one of the preceding claims, **characterised in that** the intermediary element (20a, 22a, 24a, 26a, 28a, 30a, 32a, 34a; 36b, 38b; 36c, 40c) comprises at least one connection support (52b, 54b; 52c, 54c; 52d, 54d) via which the aircraft seat element (14a, 16a, 18a, 42a, 44a, 46a, 48a, 50a; 14b, 16b, 18, 42b; 14c, 16c, 18c, 42c) is coupled with the intermediary element (20a, 22a, 24a, 26a, 28a, 30a, 32a, 34a; 36b, 38b; 36c, 40c).

5. Aircraft seat mounting device according to claim 4, **characterised in that** the connection support (52a, 54b; 52b, 54b; 52c, 54c; 52d, 54d) is coupled with the intermediary element (20a, 22a, 24a, 26a, 28a, 30a, 32a, 34a; 36b, 38b; 36c, 40c) by substance-to-substance bond.

6. Aircraft seat mounting device according to claim 4 or 5, **characterised in that** the connection support (52a, 54a; 52b, 54b; 52c, 54c; 52d, 54d) has in a connection zone with the intermediary element (20a, 22a, 24a, 26a, 28a, 30a, 32a, 34a; 36b, 38b; 36c, 40c) an extension in a circumferential direction that is smaller than 180 degrees.

7. Aircraft seat mounting device according to one of the preceding claims, **characterised in that** the at least one intermediary element (20a, 22a, 24a, 26a, 28a, 30a, 32a, 34a; 36b, 38b; 36c, 40c) is fixated in at least one axial direction relative to the carrier profile (10a, 12a; 10b, 12b; 10c, 12c; 10d).

8. Aircraft seat mounting device according to one of the preceding claims, **characterised in that** in at least one operation state the intermediary element (20a, 22a, 24a, 26a, 28a, 30a, 32a, 34a; 36b, 38b; 36c, 40c) is arranged rotationally fixed to the carrier profile (10a, 12a; 10b, 12b; 10c, 12c; 10d).

9. Aircraft seat mounting device according to one of the preceding claims, **characterised in that** in at least one operation state the intermediary element (20a, 22a, 24a, 26a, 28a, 30a, 32a, 34a; 36b, 38b; 36c, 40c) is fixedly connected with the carrier profile (10a, 12a; 10b, 12b; 10c, 12c; 10d) by means of an adhesive connection.

10. Aircraft seat mounting device according to one of the preceding claims, **characterised in that** the carrier profile (10a, 12a; 10b, 12b; 10c, 12c; 10d) is implemented at least substantially of a lightweight metal and/or of a fibre composite material.

11. Aircraft seat mounting device at least according to claim 1, **characterised by** at least one second intermediary element (40b, 96b), wherein respectively only one aircraft seat element (14b, 16b, 18b, 42b, 44b, 46b, 48b, 50b) is coupled with one of the two intermediary elements (36b, 38b, 40b, 96b).

12. Aircraft seat mounting device at least according to claim 1, **characterised by** at least one further aircraft seat element (44c, 46c), which is directly coupled with the carrier profile (10c).

13. Aircraft seat with an aircraft seat mounting device according to one of the preceding claims.

## Revendications

1. Dispositif de support de siège d'avion avec au moins un profilé porteur (10a, 12a ; 10b, 12b ; 10c, 12c ; 10d), avec au moins un élément de siège d'avion (14a, 16a, 18a, 42a, 44a, 46a, 48a, 50a ; 14b, 16b, 18b, 42b ; 14c, 16c, 18c, 42c), qui est réalisé comme partageur de sièges ou comme piètement de siège, et avec au moins un élément intermédiaire (20a, 22a, 24a, 26a, 28a, 30a, 32a, 34a ; 36b, 38b, 40b, 96b ; 36c, 40c ; 20d) qui au moins sensiblement entoure l'au moins un profilé porteur (10a, 12a ; 10b, 12b ; 10c, 12c ; 10d) et est couplé avec l'au moins un élément de siège d'avion (14a, 16a, 18a, 42a, 44a, 46a, 48a, 50a ; 14b, 16b, 18b, 42b ; 14c, 16c, 18c, 42c), l'élément intermédiaire étant fixé en direction axiale par rapport au profilé porteur sur lequel il est disposé,
où en état d'opération normal l'élément intermédiaire (20a, 22a, 24a, 26a, 28a, 30a, 32a, 34a ; 36b, 38b, 40b, 96b ; 36c, 40c ; 20d) est disposé solidaire en rotation avec le profilé porteur (10a, 12a ; 10b, 12b ; 10c, 12c ; 10d),
où l'élément intermédiaire (20a, 22a, 24a, 26a, 28a, 30a, 32a, 34a ; 36b, 38b, 40b, 96b ; 36c, 40c ; 20d) est sécurisé contre une rotation jusqu'à une charge maximale définie,
où au moins en cas d'un crash/d'une déformation l'élément intermédiaire (20a, 22a, 24a, 26a, 28a, 30a, 32a, 34a ; 36b, 38b, 40b, 96b ; 36c, 40c ; 20d) est disposé de manière rotative par rapport au profilé porteur (10a, 12a ; 10b, 12b ; 10c, 12c ; 10d),
des contraintes de torsion sur le profilé porteur (10a, 12a ; 10b, 12b ; 10c, 12c ; 10d) étant donc empêchées ou minimisées.

2. Dispositif de support de siège d'avion selon la revendication 1,
**caractérisé en ce qu'**en état d'opération normal l'élément intermédiaire (20a, 22a, 24a, 26a, 28a, 30a, 32a, 34a ; 36b, 38b, 40b, 96b ; 36c, 40c ; 20d) est disposé sur le profilé porteur (10a, 12a ; 10b, 12b ; 10c, 12c ; 10d) solidairement en rotation et par fixation adhésive axiale.

3. Dispositif de support de siège d'avion selon la revendication 1 ou 2,
**caractérisé par** au moins un élément de siège d'avion de plus (44a, 46a, 48a, 50a), qui est couplé avec l'élément intermédiaire (20a, 22a, 24a, 26a).

4. Dispositif de support de siège d'avion selon l'une quelconque des revendications précédentes,
**caractérisé en ce que** l'élément intermédiaire (20a, 22a, 24a, 26a, 28a, 30a, 32a, 34a ; 36b, 38b ; 36c, 40c) comporte au moins un tréteau de raccordement (52a, 54a ; 52b, 54b ; 52c ; 52d, 54d), par le biais duquel l'élément de siège d'avion (14a, 16a, 18a, 42a, 44a, 46a, 48a, 50a ; 14b, 16b, 18b, 42b ; 14c, 16c, 18c, 42c) est couplé avec l'élément intermédiaire (20a, 22a, 24a, 26a, 28a, 30a, 32a, 34a ; 36b, 38b ; 36c, 40c) par accouplement de matière.

5. Dispositif de support de siège d'avion selon la revendication 4,
**caractérisé en ce que** le tréteau de raccordement (52a, 54a ; 52b, 54b ; 52c ; 52d, 54d) est couplé avec l'élément intermédiaire (20a, 22a, 24a, 26a, 28a, 30a, 32a, 34a ; 36b, 38b ; 36c, 40c).

6. Dispositif de support de siège d'avion selon la revendication 4 ou 5,
**caractérisé en ce que** le tréteau de raccordement (52a, 54a ; 52b, 54b ; 52c ; 52d, 54d) comporte dans une zone du raccordement avec l'élément intermédiaire (20a, 22a, 24a, 26a, 28a, 30a, 32a, 34a ; 36b, 38b ; 36c, 40c) une extension en direction circonférentielle qui est moins de 180 degrés.

7. Dispositif de support de siège d'avion selon l'une quelconque des revendications précédentes,
**caractérisé en ce que** l'au moins un élément intermédiaire (20a, 22a, 24a, 26a, 28a, 30a, 32a, 34a ; 36b, 38b ; 36c, 40c) est fixé par rapport au profilé porteur (10a, 12a ; 10b, 12b ; 10c, 12c ; 10d) en au moins une direction axiale.

8. Dispositif de support de siège d'avion selon l'une quelconque des revendications précédentes,
**caractérisé en ce qu'**en au moins un état d'opération l'élément intermédiaire (20a, 22a, 24a, 26a, 28a, 30a, 32a, 34a ; 36b, 38b ; 36c, 40c) est agencé solidaire en rotation avec le profilé porteur (10a, 12a ; 10b, 12b ; 10c, 12c ; 10d).

9. Dispositif de support de siège d'avion selon l'une quelconque des revendications précédentes,
**caractérisé en ce qu'**en au moins un état d'opération l'élément intermédiaire (20a, 22a, 24a, 26a, 28a, 30a, 32a, 34a ; 36b, 38b ; 36c, 40c) est connecté fixement avec le profilé porteur (10a, 12a ; 10b, 12b ; 10c, 12c ; 10d) par une connexion adhésive.

10. Dispositif de support de siège d'avion selon l'une quelconque des revendications précédentes,
**caractérisé en ce que** le profilé porteur (10a, 12a ; 10b, 12b ; 10c, 12c ; 10d) est formé au moins sensiblement d'un métal léger et/ou d'un matériau plastique renforcé de fibres.

11. Dispositif de support de siège d'avion au moins selon la revendication 1,
**caractérisé par** au moins un deuxième élément intermédiaire (40b, 96b),
où respectivement seulement un élément de siège d'avion (14b, 16b, 18b, 42b, 44b, 46b, 48b, 50b) est couplé avec l'un des deux éléments intermédiaires (36b, 38b, 40b, 96b).

12. Dispositif de support de siège d'avion au moins selon la revendication 1,
**caractérisé par** au moins un élément de siège d'avion de plus (44c, 46c), qui est couplé avec le profilé porteur (10c) directement.

13. Siège d'avion avec un dispositif de siège d'avion selon l'une quelconque des revendications précédentes.
